# EUROPÄISCHE PATENTSCHRIFT

(11) **EP 3 835 044 B1**
(45) Veröffentlichungstag und Bekanntmachung des Hinweises auf die Patenterteilung: **02.10.2024**
(21) Anmeldenummer: 20204140.6
(22) Anmeldetag: 27.10.2020
(51) Int. Cl.: B29D 30/00

(54) **VERFAHREN UND FÜGEANLAGE ZUM BEFESTIGEN EINES AUFNAHMEKÖRPERS AN EINEM REIFEN**
METHOD AND JOINING SYSTEM FOR FIXING A RECEPTACLE TO A TYRE
PROCÉDÉ ET INSTALLATION D'ASSEMBLAGE DE FIXATION D'UN CORPS RÉCEPTEUR À UN PNEU

(30) Priorität: 10.12.2019 DE 102019219204
(43) Veröffentlichungstag der Anmeldung: 16.06.2021
(73) Patentinhaber: Continental Reifen Deutschland GmbH, 30175 Hannover (DE)
(72) Erfinder: Komischke, Ralf, 30419 Hannover (DE); Scher, Andreas, 30419 Hannover (DE); Minx, Carsten, 30419 Hannover (DE)
(74) Vertreter: Continental Corporation

(56) Entgegenhaltungen:
- EP-A2- 3 492 289
- WO-A1-2009/070146
- CN-A- 110 406 143
- DE-A1- 102015 222 219
- DE-B- 1 206 149
- DE-U1- 202005 005 144
- US-A1- 2019 193 490

## Beschreibung

Die Erfindung betrifft ein Verfahren zum Befestigen eines Aufnahmekörpers für ein elektronisches Gerät an einer innenliegenden Gummischicht eines vulkanisierten Reifens, mit dem Schritt: Positionieren einer aus einem vulkanisierten Gummimaterial ausgebildeten Kontaktfläche des Aufnahmekörpers an einem aussparungsfreien Fügeabschnitt der innenliegenden Gummischicht des vulkanisierten Reifens mittels eines Setzwerkzeugs.

Ferner betrifft die Erfindung eine Fügeanlage zum Befestigen eines Aufnahmekörpers für ein elektronisches Gerät an einer innenliegenden Gummischicht eines vulkanisierten Reifens, mit einem Setzwerkzeug, mittels welchem eine aus einem vulkanisierten Gummimaterial ausgebildete Kontaktfläche des Aufnahmekörpers an einem aussparungsfreien Fügeabschnitt der innenliegenden Gummischicht des vulkanisierten Reifens positionierbar ist.

Moderne Fahrzeugreifen werden vermehrt mit elektronischen Geräten ausgestattet, damit der Reifenzustand während des Fahrens vom Fahrzeug oder Fahrzeugführer überwachbar ist. In diesem Zusammenhang werden Fahrzeugreifen häufig mit einem Reifendruckkontrollsensor ausgestattet, damit ein Reifendruckverlust während der Fahrt frühzeitig und zuverlässig festgestellt werden kann. Zur Befestigung eines entsprechenden Sensors im Inneren des Reifens war es bisher üblich, einen als Gummicontainer ausgebildeten Aufnahmekörper für den Sensor mittels eines Klebstoffes an der Innenseele eines vulkanisierten Reifens zu fixieren. Zur Befestigung des Aufnahmekörpers hat sich in der Praxis die Verwendung eines Cyanacrylat-Klebesystems durchgesetzt.

Es hat sich jedoch herausgestellt, dass entsprechende Klebstoff-Verbindungen in einigen Anwendungsfällen ausfallen können, wodurch sich der Aufnahmekörper samt Sensor von der Innenseele des Reifens lösen kann. Darüber hinaus sind geeignete Klebstoffe vergleichsweise teuer, sodass die Produktionskosten entsprechender Fahrzeugreifen durch die Sensoranbringung teilweise erheblich gesteigert werden.

Zur Verbesserung der Haltbarkeit und Belastbarkeit der Sensorbefestigung ist es bekannt, den Fügeabschnitt einer innenliegenden Gummischicht des vulkanisierten Reifens vorzubehandeln. Entsprechende Maßnahmen werden beispielsweise in der Druckschrift EP 1 604 809 A1 vorgeschlagen.

Aus den Druckschriften EP 1 268 225 B1 und EP 1 501 691 B1 sind außerdem Lösungen bekannt, wie die Sensorelektronik in einen Aufnahmekörper eingebettet werden kann. Zur Realisierung einer langlebigen und robusten Sensorbefestigung ist der Aufnahmekörper dann im Innenbereich eines vulkanisierten Reifens zu befestigen.

Im Stand der Technik sind ferner Lösungen zur Befestigung einer Sensorhalterung bekannt, bei welchen die Sensorhalterung durch Vulkanisieren an einer Innenfläche eines vulkanisierten Reifens befestigt wird. Eine entsprechende Vulkanisationsbefestigung wird beispielsweise in der Druckschrift EP 0 906 839 A2 vorgeschlagen.

Die Druckschrift EP 3 492 289 A2 schlägt vor, eine aus einem nicht-vulkanisierten Material ausgebildete Containerstruktur für einen Sensor direkt an einer Innenschicht eines Reifens zu vulkanisieren.

Diese und anderen bekannte Lösungen sind jedoch nicht oder nur bedingt zur automatisierten Befestigung von Sensoraufnahmen im Inneren eines vulkanisierten Reifens geeignet.

Die der Erfindung zugrundeliegende Aufgabe besteht somit darin, eine automatisierbare und gleichzeitig haltbare und belastbare Befestigung eines Aufnahmekörpers für ein elektronisches Gerät an einer innenliegenden Gummischicht eines vulkanisierten Reifens zu ermöglichen.

Die der Erfindung zugrundeliegende Aufgabe wird gelöst durch ein Verfahren der eingangs genannten Art, wobei die Kontaktfläche des Aufnahmekörpers im Rahmen des erfindungsgemäßen Verfahrens mit dem Fügeabschnitt der innenliegenden Gummischicht des vulkanisierten Reifens durch Vulkanisation eines zwischen der Kontaktfläche des Aufnahmekörpers und dem Fügeabschnitt der innenliegenden Gummischicht des vulkanisierten Reifens befindlichen Vulkanisationsmittels gefügt wird. Das Setzwerkzeug wird dabei vor und/oder während des Fügens des Aufnahmekörpers mit dem Fügeabschnitt der innenliegenden Gummischicht des vulkanisierten Reifens zur Erzielung eines Wärmeeintrags in das Vulkanisationsmittel beheizt.

Die Erfindung macht sich die Erkenntnis zunutze, dass durch die Vulkanisation des zwischen der Kontaktfläche des Aufnahmekörpers und dem Fügeabschnitt der innenliegenden Gummischicht des Reifens befindlichen Vulkanisationsmittels eine Vernetzung der Kontaktfläche des Aufnahmekörpers und des Fügeabschnitts der innenliegenden Gummischicht des Reifens erfolgt. Die molekulare Verbindung, welche durch die Vulkanisation erzeugt wird, ist haltbarer und kostengünstiger als eine Klebstoffverbindung. Durch das Beheizen des Setzwerkzeugs lässt sich ein fügespezifischer Wärmeeintrag in das Vulkanisationsmittel erreichen, wodurch eine erhebliche Steigerung der Belastbarkeit und Haltbarkeit der vulkanisierten Verbindung erreicht wird.

Das Gummimaterial der Kontaktfläche des Aufnahmekörpers ist durch Vulkanisation hergestellt. Beispielsweise handelt es sich bei dem Aufnahmekörper um einen Gummikörper. Die innenliegende Gummischicht des Reifens ist vorzugsweise die Innenseele bzw. der Innerliner des Reifens. Beim Befestigen des Aufnahmekörpers an der innenliegenden Gummischicht des Reifens werden folglich zwei bereits vulkanisierte Materialschichten miteinander gefügt.

Durch das Positionieren der Kontaktfläche des Aufnahmekörpers an dem Fügeabschnitt der innenliegenden Gummischicht des Reifens erfolgt ein Kontaktieren der Kontaktfläche des Aufnahmekörpers und des Fügeabschnitts der innenliegenden Gummischicht des Reifens. Vorzugsweise erfolgt ein Andrücken des Aufnahmekörpers an die innenliegende Gummischicht des vulkanisierten Reifens mittels des Setzwerkzeugs. Das Andrücken des Aufnahmekörpers erfolgt vorzugsweise mit einem vorgegebenen Anpressdruck und/oder über eine vorgegebene Anpressdauer. Das Setzwerkzeug ist vorzugsweise an einem antreibbaren Bewegungssystem befestigt, über welches das Setzwerkzeug bewegt werden kann. Das Bewegungssystem, an welchem das Setzwerkzeug befestigt ist, kann beispielsweise ein Roboter sein. Das Setzwerkzeug ist vorzugsweise zumindest abschnittsweise aus einem wärmeleitenden Material ausgebildet, beispielsweise aus Stahl oder Aluminium. Ferner kann das Setzwerkzeug aktiv oder passiv beheizt werden. Der Heizvorgang am Setzwerkzeug ist vorzugsweise steuerbar oder regelbar. Das Setzwerkzeug umfasst einen beheizbaren Stempel. Der beheizbare Stempel kann einteilig oder mehrteilig ausgebildet sein. Alternativ zu dem Stempel weist das Setzwerkzeug einen Heizbalg auf, welcher dazu eingerichtet ist, in einer Aufnahmekammer des Aufnahmekörpers angeordnet zu werden. Das Setzwerkzeug kann eine Heizeinrichtung, beispielsweise eine elektrische Heizeinrichtung, umfassen.

In einer bevorzugten Ausführungsform des erfindungsgemäßen Verfahrens erfolgt vor dem Positionieren der Kontaktfläche des Aufnahmekörpers an dem Fügeabschnitt der innenliegenden Gummischicht des Reifens ein Vorbehandeln der Kontaktfläche des Aufnahmekörpers und/oder ein Vorbehandeln des Fügeabschnitts der innenliegenden Gummischicht des Reifens. Durch das Vorbehandeln wird die Kontaktfläche des Aufnahmekörpers und/oder der Fügeabschnitt der innenliegenden Gummischicht des Reifens für den Fügevorgang präpariert. Die Kontaktfläche des Aufnahmekörpers und/oder der Fügeabschnitt der innenliegenden Gummischicht des Reifens können thermisch, mechanisch und/oder chemisch vorbehandelt werden. Das thermische Vorbehandeln kann ein Temperieren, insbesondere ein Aufheizen oder Abkühlen der Kontaktfläche des Aufnahmekörpers und/oder des Fügeabschnitts der innenliegenden Gummischicht des Reifens umfassen. Das mechanische Vorbehandeln kann das mechanische Erzeugen einer veränderten Oberflächenstruktur, beispielsweise durch Materialabtrag, der Kontaktfläche des Aufnahmekörpers und/oder des Fügeabschnitts der innenliegenden Gummischicht des Reifens umfassen. Das chemische Vorbehandeln kann das Auftragen von oberflächeneigenschaftenverändernden Stoffen auf die Kontaktfläche des Aufnahmekörpers und/oder den Fügeabschnitt der innenliegenden Gummischicht des Reifens umfassen.

In einer besonders bevorzugten Ausführungsform des erfindungsgemäßen Verfahrens umfasst das Vorbehandeln der Kontaktfläche des Aufnahmekörpers und/oder des Fügeabschnitts der innenliegenden Gummischicht des Reifens ein Reinigen der Kontaktfläche des Aufnahmekörpers und/oder des Fügeabschnitts der innenliegenden Gummischicht des Reifens. Durch ein entsprechendes Reinigen können Schmutzpartikel und/oder Restmengen von Einsprühlösungen von der Kontaktfläche des Aufnahmekörpers und/oder des Fügeabschnitts der innenliegenden Gummischicht entfernt werden. Das Reinigen kann beispielsweise chemisch, insbesondere unter Verwendung von Lösungsmitteln und/oder mechanisch, insbesondere unter Materialabtrag, erfolgen. Ferner kann das Reinigen mittels eines Reinigungslasers erfolgen. Der Reinigungslaser ist vorzugsweise an einem antreibbaren Bewegungssystem befestigt und wird mittels des antreibbaren Bewegungssystems über die Kontaktfläche des Aufnahmekörpers und/oder den Fügeabschnitt der innenliegenden Gummischicht des Reifens bewegt. Die Reinigung der Kontaktfläche des Aufnahmekörpers und/oder des Fügeabschnitts der innenliegenden Gummischicht des Reifens kann auch entfallen, wenn vor dem Vulkanisieren des Reifens bzw. vor dem Vulkanisieren des Aufnahmekörpers ein Pflaster auf die Kontaktfläche des Aufnahmekörpers bzw. auf den Fügeabschnitt der innenliegenden Gummischicht des Reifens aufgebracht wurde. Nach Entfernen des Pflasters steht eines saubere Fügefläche zur Verfügung, welche keiner weiteren Reinigung bedarf.

In einer weiteren bevorzugten Ausführungsform des erfindungsgemäßen Verfahrens umfasst das Vorbehandeln der Kontaktfläche des Aufnahmekörpers und/oder des Fügeabschnitts der innenliegenden Gummischicht des Reifens ein Verändern der Oberflächenstruktur der Kontaktfläche des Aufnahmekörpers und/oder des Fügeabschnitts der innenliegenden Gummischicht des Reifens zur Vergrößerung der Oberfläche. Eine vergrößerte Oberfläche am Fügeabschnitt der innenliegenden Gummischicht des Reifens kann jedoch auch bereits aus der Reifenproduktion vorliegen. Das Vergrößern der Oberfläche kann unter Einsatz eines strukturierten Heizbalgs erfolgen. Ferner kann eine Oberflächenvergrößerung durch Einlegen eines Strukturierungskörpers vor der Vulkanisation des Aufnahmekörpers bzw. des Reifens erfolgen. Das Vergrößern der Oberfläche kann durch eine Oberflächenaufrauung umgesetzt werden. Die Oberflächenaufrauung kann mechanisch, chemisch und/oder berührungslos erfolgen. Die mechanische Aufrauung erfolgt vorzugsweise unter Verwendung eines Rauwerkzeugs, welches Materialpartikel aus der Oberfläche entfernt. Als Rauwerkzeug kommt insbesondere eine Rauglocke, eine Raubürste, beispielsweise aus Messing, oder ähnliche Werkzeuge in Betracht. Der Aufnahmekörper kann ein Spritzgusskörper sein. Die aufgeraute Kontaktfläche kann durch die Verwendung einer entsprechenden Spritzform erzeugt werden. Beim chemischen Aufrauen können gummiangreifende Lösungsmittel verwendet werden. Die Kontaktfläche des Aufnahmekörpers und der Fügeabschnitt der innenliegenden Gummischicht des Reifens können auf die gleiche oder auf unterschiedliche Weise aufgeraut werden. Die Aufrauung der Kontaktfläche des Aufnahmekörpers kann aufgrund einer geringen Eigenstabilität des Aufnahmekörpers auch durch Lasern erfolgen. Durch das Lasern ist ein präziser Materialabtrag an der Oberfläche möglich. Nach oder während dem Aufrauen werden Bearbeitungsrückstände, beispielsweise Gummipartikel, entfernt, beispielsweise abgesaugt. Im Rahmen des Verfahrens kann ferner die durch die Oberflächenaufrauung abgetragene Materialmenge bestimmt werden, insbesondere durch eine Volumen- und/oder Gewichtsmessung oder eine Laservermessung der aufgerauten Oberfläche. Die abgetragene Materialmenge kann bei der Mengendosierung des Vulkanisationsmittels berücksichtigt werden. Wenn vor dem Vulkanisieren des Aufnahmekörpers bzw. des Reifens ein Pflaster auf die Kontaktfläche des Aufnahmekörpers bzw. den Fügeabschnitt der innenliegenden Gummischicht des Reifens aufgetragen wurde, kann auf eine Aufrauung verzichtet werden.

In einer anderen bevorzugten Ausführungsform des erfindungsgemäßen Verfahrens erfolgt das Verändern der Oberflächenstruktur der Kontaktfläche des Aufnahmekörpers und/oder des Fügeabschnitts der innenliegenden Gummischicht des Reifens durch einen Strahlprozess. Insbesondere wird die Kontaktfläche des Aufnahmekörpers und/oder der Fügeabschnitt der innenliegenden Gummischicht des Reifens mit Trockeneis gestrahlt. Durch das Strahlen werden scharfkantige Oberflächen im Mikrometerbereich gebildet. Das zur Strahlung verwendete Strahlmaterial kann eine Körnung im Bereich von 0,12 - 0,5 mm haben. Die Kontaktfläche des Aufnahmekörpers und/oder des Fügeabschnitts der innenliegenden Gummischicht des Reifens können alternativ oder zusätzlich mit Sand, Kügelchen, Kunststoff, beispielsweise einem Duroplast, Soda, Korund, Glasperlen oder Wasser gestrahlt werden.

Es ist außerdem ein erfindungsgemäßes Verfahren vorteilhaft, bei welchem das Vorbehandeln der Kontaktfläche des Aufnahmekörpers und/oder des Fügeabschnitts der innenliegenden Gummischicht des Reifens ein Aktivieren der Kontaktfläche des Aufnahmekörpers und/oder des Fügeabschnitts der innenliegenden Gummischicht des Reifens umfasst. Das Aktivieren erfolgt durch einen Aufbruch von Molekülen an der Kontaktfläche des Aufnahmekörpers und/oder dem Fügeabschnitt der innenliegenden Gummischicht des Reifens. Durch das Aktivieren wird die Klebefreudigkeit der Kontaktfläche des Aufnahmekörpers und/oder des Fügeabschnitts der innenliegenden Gummischicht des Reifens erhöht. Insbesondere bei nicht-aufgerauten Flächen kann durch die Oberflächenaktivierung eine erhebliche Steigerung der Haltbarkeit und Belastbarkeit einer Vulkanisationsverbindung herbeigeführt werden. Das Aufbrechen der Moleküle sorgt für eine gesteigerte Anzahl an Kontaktpunkten. Die Kontaktpunkte des Aufnahmekörpers und/oder des Fügeabschnitts der innenliegenden Gummischicht des Reifens können durch eine Corona-Behandlung, eine Plasma-Behandlung und/oder chemisch mittels lösungsmittelhaltigen Produkten aktiviert werden. Bei der Corona-Behandlung wird die Kontaktfläche des Aufnahmekörpers und/oder der Fügeabschnitt der innenliegenden Gummischicht des Reifens mit ionisierter Luft behandelt. Bei der Plasma-Behandlung wird der Kontaktfläche des Aufnahmekörpers und/oder dem Fügeabschnitt der innenliegenden Gummischicht des Reifens ein entsprechendes Gas zugeleitet. Bei der Corona-Behandlung und der Plasma-Behandlung wird vorzugsweise eine Düse über die Kontaktfläche des Aufnahmekörpers und/oder den Fügeabschnitt der innenliegenden Gummischicht des Reifens geführt. Die Düsenführung kann dabei manuell oder automatisiert erfolgen. Die Düse kann an einem antreibbaren Bewegungssystem befestigt sein und über das Bewegungssystem über die Kontaktfläche des Aufnahmekörpers und/oder den Fügeabschnitt der innenliegenden Gummischicht des Reifens bewegt werden. Nach der Aktivierung der Kontaktfläche des Aufnahmekörpers und/oder des Fügeabschnitts der innenliegenden Gummischicht des Reifens ist eine zügige Weiterbehandlung erforderlich, da Luftkontakt den Aktivierungseffekt wieder verringert.

In einer anderen Ausführungsform des erfindungsgemäßen Verfahrens wird vor dem Positionieren der Kontaktfläche des Aufnahmekörpers an dem Fügeabschnitt der innenliegenden Gummischicht des Reifens das Vulkanisationsmittel auf die Kontaktfläche des Aufnahmekörpers und/oder auf den Fügeabschnitt der innenliegenden Gummischicht des Reifens aufgetragen. Das Vulkanisationsmittel kann auch als Vernetzungsmittel oder Haftmittel bezeichnet werden. Das Vulkanisationsmittel kann als Einzelschicht oder mehrschichtig aufgetragen werden. Das Vulkanisationsmittel kann ein Festkörper oder ein Fluid, beispielsweise eine Paste sein. Das Vulkanisationsmittel kann auch eine Gummilösung sein. Ferner kann das Vulkanisationsmittel nach dem Auftrag gleichmäßig auf der Kontaktfläche des Aufnahmekörpers und/oder auf dem Fügeabschnitt der innenliegenden Gummischicht des Reifens verteilt werden. Das Vulkanisationsmittel kann nach dem Auftrag und vor dem Positionieren der Kontaktfläche des Aufnahmekörpers an dem Fügeabschnitt der innenliegenden Gummischicht des Reifens zwischengetrocknet werden. Alternativ kann das Vulkanisationsmittel auch unmittelbar vor dem Positionieren der Kontaktfläche des Aufnahmekörpers an dem Fügeabschnitt der innenliegenden Gummischicht des Reifens aufgetragen werden. Das aufgetragene Vulkanisationsmittel kann vorgewärmt sein. Der Auftrag des Vulkanisationsmittels kann über eine Auftragsdüse erfolgen. Der Auftrag des Vulkanisationsmittels erfolgt beispielsweise schneckenförmig. Dabei kann entweder die Auftragsdüse und/oder der Aufnahmekörper bzw. der Reifen bewegt werden. Das Vulkanisationsmittel kann auch in einem Vorproduktionsschritt auf die Kontaktfläche des Aufnahmekörpers aufgebracht werden. Das Vulkanisationsmittel ist in diesem Fall vorzugsweise mit einer Schutzschicht, insbesondere einer Schutzfolie, abgedeckt und ist vor dem Fügen chemisch inaktiv. Das Vulkanisationsmittel kann mit unvulkanisiertem Gummi vermischt sein, wobei das unvulkanisierte Gummi in Form einer Schnur oder in Granulatform vorliegen kann. Außerdem kann ein Vulkanisationsbeschleuniger oder ein Vulkanisationshemmer zu dem Vulkanisationsmittel hinzugegeben werden.

Das Vulkanisationsmittel kann auch in Mikrokapseln eingebettet sein und direkt auf die Kontaktfläche des Aufnahmekörpers und/oder den Fügeabschnitt der innenliegenden Gummischicht des Reifens aufgebracht werden. Die Hülle der Mikrokapseln besteht vorzugsweise aus einem Material, welches durch das Anpressen der Kontaktfläche des Aufnahmekörpers an den Fügeabschnitt der innenliegenden Gummischicht des Reifens mechanisch aufgebrochen wird, sodass das Fluid aus den Kapseln freigesetzt und in die Gummimatrix eingebettet wird. Insbesondere ist das Kapselmaterial ein Grundbestandteil der Gummimischung des Aufnahmekörpers oder des Reifens. Denkbar ist auch ein Kapselmaterial aus anderen Materialien, die sich in die Verbindungsmatrix einbetten lassen. Das Vulkanisationsmittel kann auch in einem offenporigen Schaumgummi dem Prozess zugeführt werden. Unter Druck wird das Fluid aus den Schaumporen befördert und steht für den weiteren Vulkanisationsprozess zur Verfügung. Das Vulkanisationsmittel kann dem Prozess in Form eines mit dem Fluid gedippten Fadenförmigen Trägermaterials zugeführt werden. Das fadenförmige Trägermaterial kann beispielsweise aus einem Textilmaterial ausgebildet sein. Das nicht-vulkanisierte Gummimaterial kann dem Prozess auch bereits gemischt zugeführt werden. Das unvulkanisierte Gummi kann zum Beispiel in einem Extruder mit dem Vulkanisationsmittel kurz vor dem Auftragen gemischt werden. Das Vulkanisationsmittel kann zusätzlich Bestandteile enthalten, die unter UV-Licht sichtbar werden. Die Sichtbarkeit unter UV-Einfluss kann beispielsweise genutzt werden, um an den Randbereichen der Fügeflächen Materialüberschüsse leichter zu erkennen. Das nicht-vulkanisierte Gummimaterial kann Bestandteile enthalten, welche die elektrische Leitfähigkeit beeinflussen. Vorzugsweise ist die elektrische Leitfähigkeit des nicht-vulkanisierten Gummimaterials höher als die Leitfähigkeit der zu verbindenden angrenzenden Teile. Damit wird die Qualitätsprüfung über die Messung der elektrischen Leitfähigkeit der Verbindung ermöglicht. Das nicht-vulkanisierte Gummimaterial kann vorgewärmt aufgetragen werden. Auch eine Vor- und/oder Teilvernetzung ist denkbar. Ein erhöhtes Temperaturniveau verringert den für die Fügung erforderlichen Wärmebedarf und damit auch die Zykluszeit des Fügeprozesses.

In einer weiteren bevorzugten Ausführungsform des erfindungsgemäßen Verfahrens wird vor dem Positionieren der Kontaktfläche des Aufnahmekörpers an dem Fügeabschnitt der innenliegenden Gummischicht des Reifens ein das Vulkanisationsmittel umfassendes Trägerteil auf der Kontaktfläche des Aufnahmekörpers und/oder auf dem Fügeabschnitt der innenliegenden Gummischicht des Reifens positioniert. Das Trägerteil kann ein Flachmaterial, insbesondere ein Trägerstreifen oder eine Trägerplatte, umfassen, auf dessen Oberseite und/oder Unterseite Vulkanisationsmittel aufgebracht ist. Der Trägerstreifen oder die Trägerplatte können vernetzbares unvulkanisiertes Gummi umfassen.

In einer weiteren bevorzugten Ausführungsform des erfindungsgemäßen Verfahrens umfasst das Vulkanisationsmittel eine ölbasierte, eine lösungsmittelbasierte oder eine wasserbasierte Gummilösung. Die ölbasierte Gummilösung kann in einer Dispersion mit Wasser vorliegen. Bei einer entsprechenden Dispersion kann die Menge an Öl so bemessen sein, dass die Integration in die Gummimolekülmatrix der nicht-vulkanisierten Bestandteile der Gummilösung problemlos möglich ist. die Wasserbestandteile sind in diesem Fall nur für die Verringerung der Viskosität vorhanden und werden im Vulkanisationsprozess verdampft. Die ölbasierte Gummilösung kann Peroxide enthalten. Die Integration der öligen Bestandteile in die Molekülmatrix der Verbindungsschicht erfolgt vorzugsweise während der warmen Vulkanisation. Eine lösungsmittelbasierte Gummilösung eignet sich auch zur Warm-Vulkanisation. Hier ist eine explosionsgeschützte Umgebung erforderlich und die Absaugung von Prozessdämpfen und Prozessgasen vorteilhaft. Bei der Verwendung einer wasserbasierten Gummilösung ist keine explosionsgeschützte Umgebung erforderlich. Das Vulkanisationsmittel kann ein wasserbasiertes Haftmittel umfassen, wie beispielsweise Chemlok oder hierzu äquivalente Mittel.

Das erfindungsgemäße Verfahren wird ferner dadurch vorteilhaft weitergebildet, dass vor dem Positionieren der Kontaktfläche des Aufnahmekörpers an dem Fügeabschnitt der innenliegenden Gummischicht des Reifens ein zuvor aufgebrachtes Pflaster von der Kontaktfläche des Aufnahmekörpers und/oder ein zuvor aufgebrachtes Pflaster von dem Fügeabschnitt der innenliegenden Gummischicht des Reifens entfernt wird. Das Pflaster kann ein gewebeverstärkter Patch oder eine gewebeverstärkte Folie sein. Das Pflaster kann bereits vor der Vulkanisation des Reifens auf den unvulkanisierten Reifenrohling aufgebracht werden. Ferner kann ein Pflaster bereits vor der Vulkanisation des Aufnahmekörpers auf den unvulkanisierten Aufnahmekörperrohling aufgebracht werden. Das Pflaster kann manuell oder automatisiert von der Kontaktfläche des Aufnahmekörpers bzw. dem Fügeabschnitt der innenliegenden Gummischicht des Reifens entfernt werden. Unter dem Pflaster befindet sich eine saubere und klebefreudige Materialoberfläche, sodass eine Reinigung der Kontaktfläche des Aufnahmekörpers und/oder des Fügeabschnitts der innenliegenden Gummischicht des Reifens nicht erforderlich ist. Ferner ist eine Oberflächenaktivierung der Kontaktfläche des Aufnahmekörpers und/oder des Fügeabschnitts der innenliegenden Gummischicht des Reifens nicht erforderlich.

In einer weiteren bevorzugten Ausführungsform des erfindungsgemäßen Verfahrens wird die Außenseite des Reifens im Bereich des Fügeabschnitts während der Vulkanisation des zwischen der Kontaktfläche des Aufnahmekörpers und dem Fügeabschnitt der innenliegenden Gummischicht des Reifens befindlichen Vulkanisationsmittels abgestützt. Somit kann während der Vulkanisation über das Setzwerkzeug ein hoher Anpressdruck zwischen der Kontaktfläche des Aufnahmekörpers und dem Fügeabschnitt der innenliegenden Gummischicht des Reifens erzeugt werden. Durch die Erzeugung eines entsprechenden Anpressdrucks während des Vulkanisationsvorgangs wird die Haltbarkeit und die Belastbarkeit der Vulkanisationsverbindung erheblich gesteigert. Zusätzlich zu dem Wärmeeintrag über das Setzwerkzeug kann auch der Reifen lokal bzw. abschnittsweise erwärmt werden, um die Vulkanisation weiter zu fördern.

In einer weiteren bevorzugten Ausführungsform des erfindungsgemäßen Verfahrens werden nach dem Fügen der Kontaktfläche des Aufnahmekörpers mit dem Fügeabschnitt der innenliegenden Gummischicht des Reifens die Eigenschaften der Verbindung zwischen der Kontaktfläche des Aufnahmekörpers und dem Fügeabschnitt der innenliegenden Gummischicht des Reifens überprüft. Hierbei können die stofflichen, thermischen und/oder elektrischen Eigenschaften der Verbindung überprüft werden. Das Überprüfen kann beispielsweise eine Messung der elektrischen Leitfähigkeit der Verbindung zwischen dem Aufnahmekörper und der innenliegenden Gummischicht des Reifens umfassen. Hierzu ist eine Kontaktierung des Aufnahmekörpers und des Reifens mit Kontaktpolen einer Messeinrichtung erforderlich, welche dazu eingerichtet ist, einen elektrischen Widerstand zwischen den Kontaktpolen zu ermitteln. Die Kontaktpole der Messeinrichtung können als Nadelkontakte oder als Bürstenkontakte ausgebildet sein. Die Kontaktpole können an einem antreibbaren Bewegungssystem befestigt sein und über das antreibbare Bewegungssystem bewegt werden. Die Messdaten der Messeinrichtung werden vorzugsweise gespeichert und/oder ausgewertet. Bei Überschreitung eines spezifischen Widerstandswertes kann die Verbindungsqualität als ausreichend beurteilt werden.

Das erfindungsgemäße Verfahren wird ferner dadurch vorteilhaft weitergebildet, dass ein elektronisches Gerät in eine Aufnahmekammer des Aufnahmekörpers eingesetzt wird. Vorzugsweise wird das elektronische Gerät in der Aufnahmekammer des Aufnahmekörpers fixiert. Das Fixieren kann stoffschlüssig, kraftschlüssig und/oder formschlüssig erfolgen. Vorzugsweise wird das elektronische Gerät in die Aufnahmekammer des Aufnahmekörpers eingeklipst. Insbesondere erfolgt ein Aufweiten einer Einsetzöffnung der Aufnahmekammer des Aufnahmekörpers vor dem Einsetzen des elektronischen Geräts, beispielsweise durch Spreizglieder. Die Spreizglieder können fingerförmig bzw. als Finger ausgebildet sein. Das Einsetzwerkzeug kann mit einem antreibbaren Bewegungssystem verbunden sein, mittels welchem das Einsetzwerkzeug bewegbar ist. Das Einsetzen des elektronischen Geräts erfolgt vorzugsweise nach dem Fügen der Kontaktfläche des Aufnahmekörpers und des Fügeabschnitts der innenliegenden Gummischicht des Reifens. Somit können sämtliche Reifen mit entsprechenden Aufnahmekörpern ausgestattet werden. Lediglich im Bedarfsfall wird dann ein elektronisches Gerät eingesetzt. Reifen, welche mit einem entsprechenden Aufnahmekörper ausgestattet sind, können somit auch ohne Sensor als "sensor-ready" ausgeliefert werden. Ob ein Reifen mit einem Sensor ausgestattet ist, kann an der Außenseite des Reifens kenntlich gemacht sein. In einer alternativen Ausführungsform kann das elektronische Gerät bereits während des Fügens der Kontaktfläche des Aufnahmekörpers und des Fügeabschnitts der innenliegenden Gummischicht des Reifens in den Aufnahmekörper eingesetzt sein.

Das elektronische Gerät kann ein Sensor, beispielsweise ein in einem Kunststoffgehäuse befindlicher Drucksensor, sein. Der Aufnahmekörper kann ein Gummicontainer sein. Der Gummicontainer ist vorzugsweise elastisch verformbar.

Das Verfahren kann ferner das Auslesen einer Kennung des elektronischen Geräts mittels eines Auslesegeräts umfassen. Das Auslesen der Kennung des elektronischen Geräts erfolgt vorzugsweise drahtlos. Die Kennung des elektronischen Geräts kann eine Sensor-ID sein. Vorzugsweise wird die ausgelesene Kennung gespeichert, insbesondere zusammen mit einem Identifikationsmerkmal des Reifens. Die Kennung des elektronischen Geräts und/oder das Identifikationsmerkmal des Reifens können in einer externen Datenbank oder auf einem Speicher des elektronischen Geräts gespeichert werden. Ferner kann das Verfahren das Aufbringen, insbesondere Auflasern, einer dem elektronischen Gerät zugeordneten Kennung auf die Außenseite des Reifens umfassen. Die aufgebrachte Kennung auf der Außenseite des Reifens kann ein Logo sein. Über die außenliegende Kennung kann das in dem Reifen verbaute elektronische Gerät von außen erfasst werden.

In einer weiteren bevorzugten Ausführungsform des erfindungsgemäßen Verfahrens erfolgt das Fügen der Kontaktfläche des Aufnahmekörpers mit dem Fügeabschnitt der innenliegenden Gummischicht des Reifens in einer technischen Fügeanlage. Vorzugsweise wird der vulkanisierte Reifen im Rahmen des Verfahrens zunächst zu einer Identifikationsstation der Fügeanlage gefördert. Das Fördern des vulkanisierten Reifens zu der Identifikationsstation der Fügeanlage kann mittels einer technischen Fördereinrichtung erfolgen. Die technische Fördereinrichtung kann beispielsweise ein Förderband sein. Vorzugsweise erfolgt in der Identifikationsstation der Fügeanlage ein Erfassen eines Identifikationsmerkmals des Reifens. Das Erfassen des Identifikationsmerkmals des Reifens kann über das Auslesen einer Kennung, beispielsweise eines Codes, insbesondere eines QR-Codes, oder eines Barcodes, und/oder über RFID erfolgen. Das Auslesen kann manuell durch einen Maschinenbediener und/oder sensorbasiert durch die Fügeanlage erfolgen. Vorzugsweise erfolgt ein Abgleichen des erfassten Identifikationsmerkmals des Reifens mit einem Eintrag in einer Datenbank.

Ferner umfasst das Verfahren vorzugsweise ein Fördern des vulkanisierten Reifens zu einer Fügestation der Fügeanlage mittels einer technischen Fördereinrichtung. Die technische Fördereinrichtung kann ein Förderband sein. Insbesondere bei schmalen Reifen kann in der Fügestation der Fügeanlage das Einsetzen eines Reifenspreizers in den Reifen erfolgen. Ferner kann die Temperatur des Reifens erfasst werden. In der Fügestation der Fügeanlage erfolgt ferner ein Ausrichten und/oder Fixieren des Reifens. Das Ausrichten des Reifens kann ein translatorisches und/oder ein rotatorisches Ausrichten des Reifens umfassen. Durch das Ausrichten kann eine Vorzentrierung des Reifens erfolgen. Im Rahmen des Ausrichtens kann der Reifen um seine Rotationsachse gedreht und/oder seitlich gekippt und/oder geneigt werden. Ferner umfasst das Verfahren vorzugsweise das Aufnehmen des Aufnahmekörpers durch das Setzwerkzeug der Fügeanlage. Über das Setzwerkzeug der Fügeanlage kann dem ausgerichteten und fixierten Reifen dann der Aufnahmekörper zugeführt werden.

Das Ausrichten des Reifens dient vorzugsweise zur Herbeiführung einer besseren Erreichbarkeit des Fügeabschnitts. Die Winkelposition des Fügeabschnitts kann beispielsweise der Verlängerung des DOT-Wochencodes oder eines anderen Merkmals auf der Außenseite des Reifens entsprechen. Nach dem Fügen der Kontaktfläche des Aufnahmekörpers mit dem Fügeabschnitt der innenliegenden Gummischicht des Reifens wird, falls vorhanden, der Reifenspreizer aus dem Reifen entnommen, sodass ein Abtransport des Reifens aus der Fügestation der Fügeanlage ermöglicht wird.

Die der Erfindung zugrundeliegende Aufgabe wird ferner durch eine Fügeanlage der eingangs genannten Art gelöst, wobei die erfindungsgemäße Fügeanlage eine Heizeinrichtung aufweist, mittels welcher das Setzwerkzeug zur Erzielung eines Wärmeeintrags in ein Vulkanisationsmittel vor und/oder während des Fügens des Aufnahmekörpers mit dem Fügeabschnitt der innenliegenden Gummischicht des vulkanisierten Reifens beheizbar ist. Die Heizeinrichtung kann beispielsweise in das Setzwerkzeug integriert sein. Die Heizeinrichtung kann eine elektrische Heizeinrichtung sein.

In einer bevorzugten Ausführungsform der erfindungsgemäßen Fügeanlage ist diese zum Ausführen des Verfahrens nach einer der vorstehend beschriebenen Ausführungsformen ausgebildet. Hinsichtlich der Vorteile und Modifikationen der erfindungsgemäßen Fügeanlage wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: den Innenbereich eines Reifens vor dem Befestigen eines Aufnahmekörpers in einer Schnittdarstellung von oben;
- Fig. 2: einen Aufnahmekörper vor der Befestigung im Innenbereich eines Reifens in einer perspektivischen Darstellung;
- Fig. 3: den in der Fig. 2 abgebildeten Aufnahmekörper in einer weiteren perspektivischen Darstellung;
- Fig. 4: einen an einer innenliegenden Gummischicht eines vulkanisierten Reifens befestigten Aufnahmekörper in einer schematischen Darstellung;
- Fig. 5: einen weiteren an einer innenliegenden Gummischicht eines vulkanisierten Reifens befestigten Aufnahmekörper in einer schematischen Darstellung;
- Fig. 6: einen Reifen samt Setzwerkzeug vor dem Fügen einer Kontaktfläche eines Aufnahmekörpers mit einem Fügeabschnitt einer innenliegenden Gummischicht des Reifens in einer schematischen Darstellung;
- Fig. 7: den in der Fig. 6 abgebildeten Reifen samt Setzwerkzeug während des Fügens der Kontaktfläche des Aufnahmekörpers mit dem Fügeabschnitt der innenliegenden Gummischicht des Reifens in einer Schnittdarstellung;
- Fig. 8: den in der Fig. 6 abgebildeten Reifen samt Setzwerkzeug während des Fügens der Kontaktfläche des Aufnahmekörpers mit dem Fügeabschnitt der innenliegenden Gummischicht des Reifens in einer Schnittdarstellung;
- Fig. 9: den in der Fig. 6 abgebildeten Reifen samt Setzwerkzeug nach dem Fügen der Kontaktfläche des Aufnahmekörpers mit dem Fügeabschnitt der innenliegenden Gummischicht des Reifens in einer Schnittdarstellung.

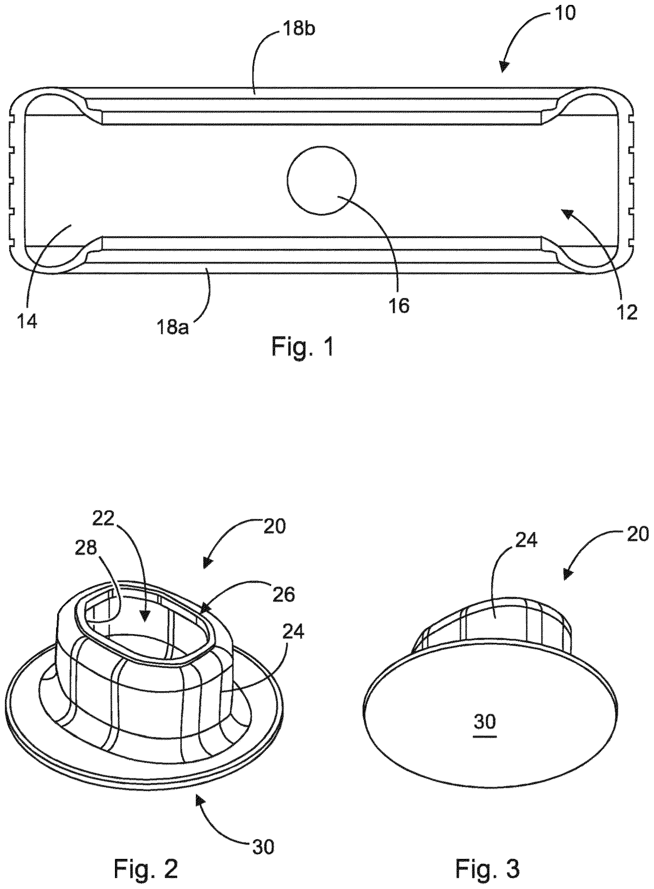

Die Fig. 1 zeigt einen Innenbereich 12 eines vulkanisierten Reifens 10, welcher mit einem Aufnahmekörper 20 für ein elektronisches Gerät ausgestattet werden soll. Der vulkanisierte Reifen 10 weist eine innenliegende Gummischicht 14 auf. Die innenliegende Gummischicht 14 des Reifens 10 ist umlaufend ausgebildet und stellt die Innenseele bzw. den Innerliner des Reifens 10 dar. Die Gummischicht 14 ist zwischen den Seitenwänden 18a, 18b des Reifens 10 angeordnet und weist einen Fügeabschnitt 16 auf. Der Fügeabschnitt 16 der innenliegenden Gummischicht 14 des Reifens 10 ist vorbehandelt, sodass eine besonders haltbare und belastbare Verbindung zu dem Aufnahmekörper 20 erzeugt wird.

Der Fügeabschnitt 16 der innenliegenden Gummischicht 14 kann thermisch, mechanisch und/oder chemisch vorbehandelt sein. Beispielsweise kann der Fügeabschnitt 16 der innenliegenden Gummischicht 14 gereinigt sein, sodass im Bereich des Fügeabschnitts 16 keine Schmutzpartikel oder Restmengen einer Einsprühlösung vorliegen. Die Reinigung kann dabei chemisch, beispielsweise mittels eines Lösungsmittels, erfolgt sein. Alternativ oder zusätzlich kann die Reinigung mechanisch, beispielsweise durch Materialabtrag, erfolgt sein. Ferner kann zum Reinigen des Fügeabschnitts 16 der innenliegenden Gummischicht 14 ein Reinigungslaser eingesetzt worden sein. Grundsätzlich kann die Reinigung automatisiert innerhalb einer technischen Fügeanlage oder manuell durch einen Bediener erfolgen.

Ferner ist die Oberflächenstruktur des Fügeabschnitts 16 der innenliegenden Gummischicht 14 zur Vergrößerung der Oberfläche verändert. Die Oberflächenvergrößerung im Bereich des Fügeabschnitts 16 der innenliegenden Gummischicht 14 ist durch eine Materialaufrauung erreicht worden. Die Materialaufrauung kann beispielsweise mechanisch oder chemisch erfolgt sein. Bei der mechanischen Aufrauung wird beispielsweise ein Rauwerkzeug eingesetzt, welches Materialpartikel an der Oberfläche entfernt. Als Rauwerkzeug kommt beispielsweise eine Rauglocke, eine Raubürste oder ein ähnliches Werkzeug in Betracht.

Die Oberflächenaufrauung kann ferner über einen Strahlprozess erfolgen, bei welchem der Fügeabschnitt 16 der innenliegenden Gummischicht 14 des Reifens 10 mit Trockeneis oder einem anderen geeigneten Material gestrahlt wird. Das Verändern der Oberflächenstruktur kann entweder automatisiert in einer technischen Fügeanlage oder manuell durch einen Maschinebediener erfolgen.

Ferner kann der Fügeabschnitt 16 der innenliegenden Gummischicht 14 durch einen Molekülaufbruch aktiviert werden. Insbesondere ist das bei Verwendung von Trockeneis beobachtet worden. Durch das Aktivieren wird die Klebefreudigkeit des Fügeabschnitts 16 der innenliegenden Gummischicht 14 des Reifens 10 erhöht. Der Molekülaufbruch sorgt für eine gesteigerte Anzahl von Kontaktpunkten, sodass bei einem späteren Fügen des Fügeabschnitts 16 der innenliegenden Gummischicht 14 mit dem Aufnahmekörper 20 eine besonders haltbare und belastbare Verbindung entsteht. Im Rahmen der Oberflächenaktivierung kann dem Fügeabschnitt 16 mittels einer Düse ionisierte Luft zugeführt werden. Alternativ oder zusätzlich kann eine Plasma-Behandlung des Fügeabschnitts 16 zur Oberflächenaktivierung erfolgen.

Durch die Vorbehandlung des Fügeabschnitts 16 der innenliegenden Gummischicht 14 kann der Aufnahmekörper 20 durch Vulkanisation eines zwischen dem Aufnahmekörper 20 und dem Fügeabschnitt 16 der innenliegenden Gummischicht 14 befindlichen Vulkanisationsmittels 32 derart gefügt werden, dass eine langlebige und robuste Vulkanisationsverbindung zwischen der innenliegenden Gummischicht 14 und dem Aufnahmekörper 20 erzeugt wird.

Die Fig. 2 und 3 zeigen einen Aufnahmekörper 20, welcher zur Befestigung an einer innenliegenden Gummischicht 14 eines vulkanisierten Reifens 10 vorbereitet ist. Der Aufnahmekörper 20 ist als Gummi-Container ausgebildet und weist eine Aufnahmekammer 22 zum Aufnehmen eines elektronischen Geräts auf. Das elektronische Gerät kann beispielsweise ein Drucksensor sein, mittels welchem der Luftdruck des Reifens 10 während der Verwendung ermittelbar ist. Die Aufnahmekammer 22 wird von einer Kammerbewandung 24 umgeben und weist eine Einsetzöffnung 26 auf, über welche das elektronische Gerät in die Aufnahmekammer 22 des Aufnahmekörpers 20 einsetzbar ist. Im Bereich der Einsetzöffnung 26 befindet sich ein umlaufender Materialsteg 28, welcher im Bereich der Einsetzöffnung 26 eine Querschnittsverkleinerung verursacht. Aufgrund des Materialstegs 26 ist der Aufnahmekörper 20 zum Einsetzen des elektronischen Geräts elastisch zu verformen. Nach dem Einsetzen des elektronischen Geräts in die Aufnahmekammer 22 des Aufnahmekörpers 20 wird das elektronische Gerät durch den Materialsteg 28 vor einem Herausfallen aus der Aufnahmekammer 22 gesichert. Aufgrund des Materialstegs 28 wird das elektronische Gerät derart formschlüssig innerhalb der Aufnahmekammer 22 gehalten, dass keine zusätzliche Stoffschlussbefestigung, beispielsweise durch Verkleben, erforderlich ist.

Auf der der Einsetzöffnung 26 gegenüberliegenden Seite weist der Aufnahmekörper 20 eine Kontaktfläche 30 auf. Die Kontaktfläche 30 ist zum Befestigen des Aufnahmekörpers 20 an einer innenliegenden Gummischicht 14 eines vulkanisierten Reifens 10 an einem Fügeabschnitt 16 der innenliegenden Gummischicht 14 zu positionieren. Das Fügen der Kontaktfläche 30 des Aufnahmekörpers 20 mit dem Fügeabschnitt 16 der innenliegenden Gummischicht 14 erfolgt dann durch Vulkanisation eines zwischen der Kontaktfläche 30 des Aufnahmekörpers 20 und dem Fügeabschnitt 16 der innenliegenden Gummischicht 14 befindlichen Vulkanisationsmittels 32.

Die Kontaktfläche 30 des Aufnahmekörpers 20 kann ebenfalls thermisch, mechanisch und/oder chemisch vorbehandelt sein. Aufgrund der filigranen Ausbildung des Aufnahmekörpers 20 ist die Kontaktfläche 30 beispielsweise mit einem Reinigungslaser gereinigt worden. Ferner kann mittels eines geeigneten Lasers eine Oberflächenstrukturierung zur Vergrößerung der Oberfläche vorgenommen worden sein. Zur Steigerung der Klebefreudigkeit der Kontaktfläche 30 des Aufnahmekörpers 20 kann die Kontaktfläche 30 durch eine Corona-Behandlung oder eine Plasma-Behandlung aktiviert sein.

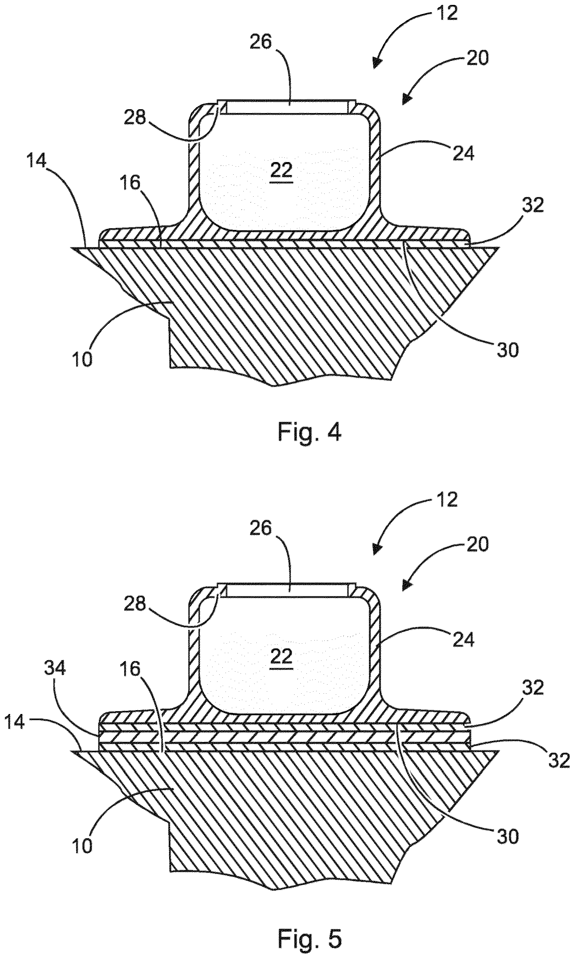

Die Fig. 4 zeigt einen vulkanisierten Reifen 10, dessen innenliegende Gummischicht 14 mit einem Aufnahmekörper 20 gefügt wurde. Das Fügen der Kontaktfläche 30 des Aufnahmekörpers 20 mit dem Fügeabschnitt 16 der innenliegenden Gummischicht 14 erfolgte dabei durch Vulkanisation eines zwischen der Kontaktfläche 30 des Aufnahmekörpers 20 und dem Fügeabschnitt 16 der innenliegenden Gummischicht 14 befindlichen Vulkanisationsmittels 32.

Vor dem Positionieren der Kontaktfläche 30 des Aufnahmekörpers 20 an dem Fügeabschnitt 16 der innenliegenden Gummischicht 14 wurde das Vulkanisationsmittel 32 auf die Kontaktfläche des Aufnahmekörpers 20 und/oder auf den Fügeabschnitt 16 der innenliegenden Gummischicht 14 aufgetragen. Das Vulkanisationsmittel 32, welches auch als Benetzungsmittel bezeichnet werden kann, kann dabei in einer Einzelschicht oder mehrschichtig aufgetragen werden. Ferner kann das Vulkanisationsmittel ein Festkörper oder ein Fluid, beispielsweise eine Paste, sein.

Das Positionieren der Kontaktfläche 30 des Aufnahmekörpers 20 an dem Fügeabschnitt 16 der innenliegenden Gummischicht 14 erfolgte mittels eines Setzwerkzeugs 100 einer technischen Fügeanlage. Das Setzwerkzeug 100 wurde dabei vor und/oder während des Fügens des Aufnahmekörpers 20 mit dem Fügeabschnitt 16 der innenliegenden Gummischicht 14 zur Erzielung eines Wärmeeintrags in das Vulkanisationsmittel 32 beheizt. Durch den Wärmeeintrag in das Vulkanisationsmittel 32 vor und/oder während des Vulkanisationsprozesses wird der Fügevorgang beschleunigt und eine äußerst haltbare und belastbare Fügeverbindung erzeugt.

Nach dem Fügen der Kontaktfläche 30 des Aufnahmekörpers 20 mit dem Fügeabschnitt 16 der innenliegenden Gummischicht 14 kann dann ein elektronisches Gerät, beispielsweise ein Drucksensor, in die Aufnahmekammer 22 des Aufnahmekörpers 20 eingesetzt werden. Hierzu ist die Einsetzöffnung 26 durch Aufspreizen der Kammerbewandung 24 zu vergrößern. Nach dem Einsetzen des elektronischen Geräts in die Aufnahmekammer 22 des Aufnahmekörpers 20 sorgt der umlaufende Materialsteg 28 für eine Formschlusssicherung des elektronischen Geräts, sodass ein Verkleben des elektronischen Geräts innerhalb der Aufnahmekammer 22 nicht erforderlich ist.

Bei der in der Fig. 5 dargestellten Fügeverbindung ist das Vulkanisationsmittel 32 nicht direkt auf die Kontaktfläche 30 des Aufnahmekörpers 20 und den Fügeabschnitt 16 der innenliegenden Gummischicht 14 aufgetragen worden. Vielmehr ist vor dem Positionieren der Kontaktfläche 30 des Aufnahmekörpers 20 an dem Fügeabschnitt 16 der innenliegenden Gummischicht 14 ein das Vulkanisationsmittel 32 umfassendes Trägerteil 34 auf der Kontaktfläche 30 des Aufnahmekörpers 20 oder auf dem Fügeabschnitt 16 der innenliegenden Gummischicht 14 angeordnet worden. Das Trägerteil 34 ist eine Trägerplatte, auf dessen Oberseite und Unterseite Vulkanisationsmittel 32 aufgebracht ist. Nach der Vulkanisation des Vulkanisationsmittels 32 fungiert das Trägerteil 34 somit als Zwischenelement, über welches die Verbindung zwischen dem Aufnahmekörper 20 und der innenliegenden Gummischicht 14 hergestellt ist.

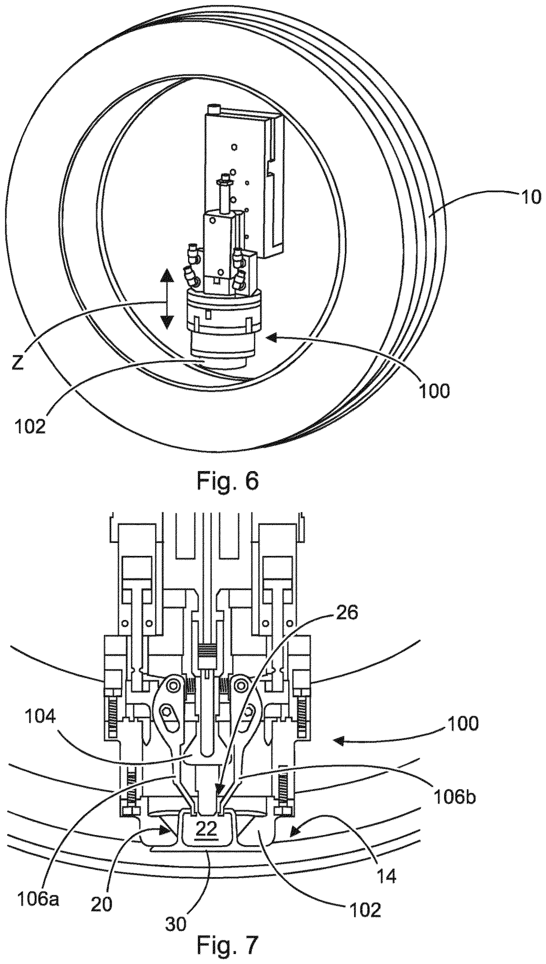

Die Fig. 6 bis 9 zeigen das Positionieren eines Aufnahmekörpers 20 und das Fügen des Aufnahmekörpers 20 mit einer innenliegenden Gummischicht 14 eines Reifens 10 mittels eines Setzwerkzeugs 100.

Das Setzwerkzeug 100 ist an einem Bewegungssystem befestigt, über welches das Setzwerkzeug 100 eine Hubbewegung entlang der vertikalen Bewegungsrichtung z ausführen kann. Ferner können das Setzwerkzeug 100 und/oder der Reifen 10 um die Rotationsachse des Reifens 10 und/oder seitlich geschwenkt und/oder verkippt werden. Durch eine entsprechende Ausrichtung des Reifens 10 kann der Fügeabschnitt 16 der innenliegenden Gummischicht 14 des Reifens 10 besser zugänglich gemacht werden. Durch eine Ausrichtung des Setzwerkzeugs 100 kann eine an die Reifenkontur angepasste Positionierung und Druckbeanspruchung des Aufnahmekörpers 20 erfolgen.

Das Setzwerkzeug 100 weist eine Halteeinheit 102 auf, in welche der Aufnahmekörper 20 einsetzbar ist. Die Halteeinheit 102 ist dazu eingerichtet, den Aufnahmekörper 20 während des Positionierens des Aufnahmekörpers 20 zu halten und den Aufnahmekörper 20 während des Fügens mit Druck zu beanspruchen. Ferner weist das Setzwerkzeug 100 einen beheizbaren Stempel 104 auf, welcher relativ zu der ebenfalls beheizbaren Halteeinheit 102 bewegbar ist. Der beheizbare Stempel wird während des Fügens durch die Einsetzöffnung 26 des Aufnahmekörpers 20 in die Aufnahmekammer 22 hineinbewegt und mit einem Bodenabschnitt der Aufnahmekammer 22 in Kontakt gebracht. Der Bodenabschnitt der Aufnahmekammer 22 und der Kontaktbereich des beheizbaren Stempels 104 weisen korrespondierende Konturen auf, sodass ein großflächiger Kontakt während des Fügens umgesetzt wird.

Die Fig. 7 zeigt, dass die Einsetzöffnung 26 zum Einsetzen des beheizten Stempels 104 in die Aufnahmekammer 22 des Aufnahmekörpers 20 aufzuspreizen ist. Die Aufspreizung der Einsetzöffnung 26 erfolgt mittels Spreizgliedern 106a, 106b des Setzwerkzeugs 100. Die Spreizglieder 106a, 106b sind schwenkbar gelagerte Spreizfinger, welcher mit einem Aktor innerhalb des Setzwerkzeugs 100 verbunden sind.

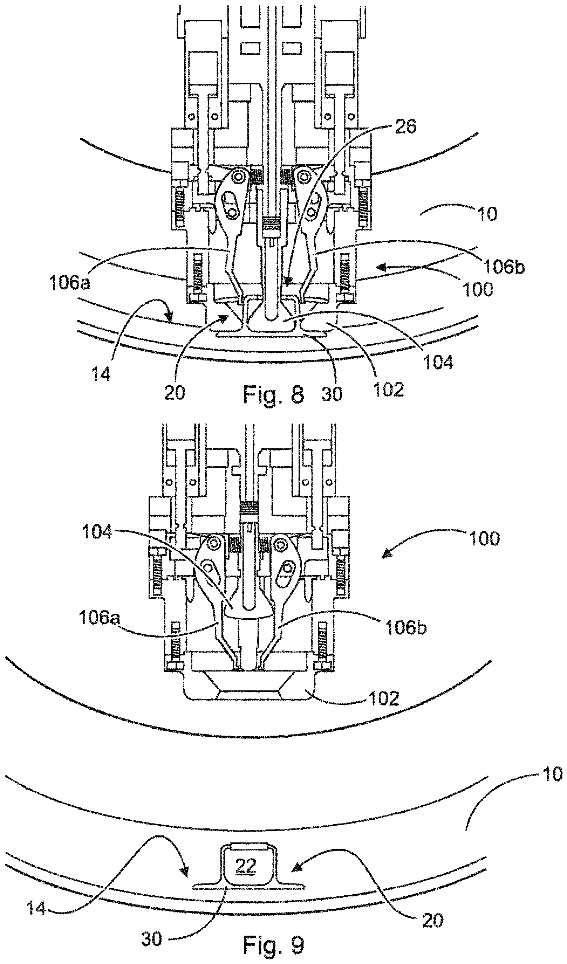

Die Fig. 8 zeigt den beheizbaren Stempel 104 nach dem Einsetzen in die Aufnahmekammer 22 des Aufnahmekörpers 20 und dem In-Kontakt-Kommen mit dem Bodenabschnitt des Aufnahmekörpers 20. Über den beheizten Stempel 104 wird ein Wärmeeintrag in ein Vulkanisationsmittels 32 zwischen der Kontaktfläche 30 des Aufnahmekörpers 20 und dem Fügeabschnitt 16 der innenliegenden Gummischicht 14 des Reifens 10 erzielt. Die Wärme wird während des Fügens des Aufnahmekörpers 20 an der Gummischicht 14 des Reifens 10 durch den Aufnahmekörper 20 zu dem Vulkanisationsmittel 32 transportiert. Ferner üben die Halteeinheit 102 und der Stempel 104 während des Vulkanisationsvorgangs einen Anpressdruck auf den Aufnahmekörper 20 aus.

Nachdem die Vulkanisation des Vulkanisationsmittels 32 zwischen der Kontaktfläche 30 des Aufnahmekörpers 20 und dem Fügeabschnitt 16 der innenliegenden Gummischicht 14 des Reifens 10 abgeschlossen ist, wird der Stempel 104 aus der Aufnahmekammer 22 des Aufnahmekörpers 20 herausbewegt und das Setzwerkzeug 100 samt Halteeinheit 102 angehoben. Aufgrund der Vulkanisationsverbindung zwischen dem Aufnahmekörper 20 und der innenliegenden Gummischicht 14 des Reifens 10 wird der Aufnahmekörper 20 an der Gummischicht 14 gehalten und somit von der Halteeinheit 102 gelöst.

In die Aufnahmekammer 22 des Aufnahmekörpers 20 kann nunmehr ein elektronisches Gerät, beispielsweise ein Drucksensor, eingesetzt werden.

### Bezugszeichenliste

- 10: Reifen
- 12: Innenbereich
- 14: Gummischicht
- 16: Fügeabschnitt
- 18a, 18b: Seitenwände
- 20: Aufnahmekörper
- 22: Aufnahmekammer
- 24: Kammerbewandung
- 26: Einsetzöffnung
- 28: Materialsteg
- 30: Kontaktfläche
- 32: Vulkanisationsmittel
- 34: Trägerteil

- 100: Setzwerkzeug
- 102: Halteeinheit
- 104: Stempel
- 106a, 106b: Spreizglieder

- z: Bewegungsrichtung

## Patentansprüche

1. Verfahren zum Befestigen eines Aufnahmekörpers (20) für ein elektronisches Gerät an einer innenliegenden Gummischicht (14) eines vulkanisierten Reifens (10), mit den Schritten:
- Positionieren einer aus einem vulkanisierten Gummimaterial ausgebildeten Kontaktfläche (30) des Aufnahmekörpers (20) an einem aussparungsfreien Fügeabschnitt (16) der innenliegenden Gummischicht (14) des vulkanisierten Reifens (10) mittels eines Setzwerkzeugs (100);
- Fügen der Kontaktfläche (30) des Aufnahmekörpers (20) mit dem Fügeabschnitt (16) der innenliegenden Gummischicht (14) des vulkanisierten Reifens (10) durch Vulkanisation eines zwischen der Kontaktfläche (30) des Aufnahmekörpers (20) und dem Fügeabschnitt (16) der innenliegenden Gummischicht (14) des vulkanisierten Reifens (10) befindlichen Vulkanisationsmittels (32);
wobei das Setzwerkzeug (100) vor und/oder während des Fügens des Aufnahmekörpers (20) mit dem Fügeabschnitt (16) der innenliegenden Gummischicht (14) des vulkanisierten Reifens (10) zur Erzielung eines Wärmeintrags in das Vulkanisationsmittel (32) beheizt wird.

2. Verfahren nach Anspruch 1,
**dadurch gekennzeichnet, dass** vor dem Positionieren der Kontaktfläche (30) des Aufnahmekörpers (20) an dem Fügeabschnitt (16) der innenliegenden Gummischicht (14) des Reifens (10) zumindest einer der folgenden Schritte ausgeführt wird:
- Vorbehandeln, insbesondere thermisches, mechanisches und/oder chemisches Vorbehandeln, der Kontaktfläche (30) des Aufnahmekörpers (20);
- Vorbehandeln, insbesondere thermisches, mechanisches und/oder chemisches Vorbehandeln, des Fügeabschnitts (16) der innenliegenden Gummischicht (14) des Reifens (10).

3. Verfahren nach Anspruch 2,
**dadurch gekennzeichnet, dass** das Vorbehandeln der Kontaktfläche (30) des Aufnahmekörpers (20) und/oder des Fügeabschnitts (16) der innenliegenden Gummischicht (14) des Reifens (10) den folgenden Schritt umfasst:
- Reinigen der Kontaktfläche (30) des Aufnahmekörpers (20) und/oder des Fügeabschnitts (16) der innenliegenden Gummischicht (14) des Reifens (10).

4. Verfahren nach Anspruch 2 oder 3,
**dadurch gekennzeichnet, dass** das Vorbehandeln der Kontaktfläche (30) des Aufnahmekörpers (20) und/oder des Fügeabschnitts (16) der innenliegenden Gummischicht (14) des Reifens (10) den folgenden Schritt umfasst:
- Verändern der Oberflächenstruktur der Kontaktfläche (30) des Aufnahmekörpers (20) und/oder des Fügeabschnitts (16) der innenliegenden Gummischicht (14) des Reifens (10) zur Vergrößerung der Oberfläche.

5. Verfahren nach Anspruch 4,
**dadurch gekennzeichnet, dass** das Verändern der Oberflächenstruktur der Kontaktfläche (30) des Aufnahmekörpers (20) und/oder des Fügeabschnitts (16) der innenliegenden Gummischicht (14) des Reifens (10) durch einen Strahlprozess erfolgt, insbesondere durch ein Strahlen der Kontaktfläche (30) des Aufnahmekörpers (20) und/oder des Fügeabschnitts (16) der innenliegenden Gummischicht (14) des Reifens (10) mit Trockeneis.

6. Verfahren nach einem der Ansprüche 2 bis 5,
**dadurch gekennzeichnet, dass** das Vorbehandeln der Kontaktfläche (30) des Aufnahmekörpers (20) und/oder des Fügeabschnitts (16) der innenliegenden Gummischicht (14) des Reifens (10) den folgenden Schritt umfasst:
- Aktivieren der Kontaktfläche (30) des Aufnahmekörpers (20) und/oder des Fügeabschnitts (16) der innenliegenden Gummischicht (14) des Reifens (10) durch einen Aufbruch von Molekülen an der Kontaktfläche (30) des Aufnahmekörpers (20) und/oder dem Fügeabschnitt (16) der innenliegenden Gummischicht (14) des Reifens (10).

7. Verfahren nach einem der vorstehenden Ansprüche,
**dadurch gekennzeichnet, dass** vor dem Positionieren der Kontaktfläche (30) des Aufnahmekörpers (20) an dem Fügeabschnitt (16) der innenliegenden Gummischicht (14) des Reifens (10) zumindest einer der folgenden Schritte ausgeführt wird:
- Auftragen des Vulkanisationsmittels (32) auf die Kontaktfläche (30) des Aufnahmekörpers (20);
- Auftragen des Vulkanisationsmittels (32) auf den Fügeabschnitt (16) der innenliegenden Gummischicht (14) des Reifens (10).

8. Verfahren nach einem der vorstehenden Ansprüche,
**dadurch gekennzeichnet, dass** vor dem Positionieren der Kontaktfläche (30) des Aufnahmekörpers (20) an dem Fügeabschnitt (16) der innenliegenden Gummischicht (14) des Reifens (10) zumindest einer der folgenden Schritte ausgeführt wird:
- Positionieren eines das Vulkanisationsmittel (32) umfassenden Trägerteils (34) auf der Kontaktfläche (30) des Aufnahmekörpers (20);
- Positionieren eines das Vulkanisationsmittel (32) umfassenden Trägerteils (34) auf dem Fügeabschnitt (16) der innenliegenden Gummischicht (14) des Reifens (10).

9. Verfahren nach einem der vorstehenden Ansprüche,
**dadurch gekennzeichnet, dass** das Vulkanisationsmittel (32) eine ölbasierte, lösungsmittelbasierte oder eine wasserbasierte Gummilösung umfasst.

10. Verfahren nach einem der vorstehenden Ansprüche,
**dadurch gekennzeichnet, dass** vor dem Positionieren der Kontaktfläche (30) des Aufnahmekörpers (20) an dem Fügeabschnitt (16) der innenliegenden Gummischicht (14) des Reifens (10) zumindest einer der folgenden Schritte ausgeführt wird:
- Entfernen eines zuvor aufgebrachten Pflasters von der Kontaktfläche (30) des Aufnahmekörpers (20);
- Entfernen eines zuvor aufgebrachten Pflasters von dem Fügeabschnitt (16) der innenliegenden Gummischicht (14) des Reifens (10).

11. Verfahren nach einem der vorstehenden Ansprüche,
**dadurch gekennzeichnet, dass** die Außenseite des Reifens (10) im Bereich des Fügeabschnitts (16) während der Vulkanisation des zwischen der Kontaktfläche (30) des Aufnahmekörpers (20) und dem Fügeabschnitt (16) der innenliegenden Gummischicht (14) des Reifens (10) befindlichen Vulkanisationsmittels (32) abgestützt wird.

12. Verfahren nach einem der vorstehenden Ansprüche,
**dadurch gekennzeichnet, dass** nach dem Fügen der Kontaktfläche (30) des Aufnahmekörpers (20) mit dem Fügeabschnitt (16) der innenliegenden Gummischicht (14) des Reifens (10) der folgende Schritt ausgeführt wird:
- Überprüfen der Eigenschaften der Verbindung zwischen der Kontaktfläche (30) des Aufnahmekörpers (20) und dem Fügeabschnitt (16) der innenliegenden Gummischicht (14) des Reifens (10).

13. Verfahren nach einem der vorstehenden Ansprüche,
**gekennzeichnet durch** zumindest einen der folgenden Schritte:
- Einsetzen eines elektronischen Geräts in eine Aufnahmekammer (22) des Aufnahmekörpers (20);
- Fixieren des elektronischen Geräts in der Aufnahmekammer (22) des Aufnahmekörpers (20).

14. Verfahren nach einem der vorstehenden Ansprüche,
**dadurch gekennzeichnet, dass** das Fügen der Kontaktfläche (30) des Aufnahmekörpers mit dem Fügeabschnitt (16) der innenliegenden Gummischicht (14) des Reifens (10) in einer technischen Fügeanlage erfolgt und das Verfahren zumindest einen der folgenden Schritte umfasst:
- Fördern des vulkanisierten Reifens (10) zu einer Identifikationsstation der Fügeanlage mittels einer technischen Fördereinrichtung;
- Erfassen eines Identifikationsmerkmals des Reifens (10) in der Identifikationsstation der Fügeanlage;
- Fördern des vulkanisierten Reifens (10) zu einer Fügestation der Fügeanlage mittels einer technischen Fördereinrichtung;
- Einsetzen eines Reifenspeizers in den Reifen (10) in der Fügestation der Fügeanlage;
- Ausrichten und/oder Fixieren des Reifen (10) in der Fügestation;
- Aufnehmen des Aufnahmekörpers durch das Setzwerkzeug (100) der Fügeanlage.

15. Fügeanlage zum Befestigen eines Aufnahmekörpers für ein elektronisches Gerät an einer innenliegenden Gummischicht (14) eines vulkanisierten Reifens (10), mit
- einem Setzwerkzeug (100), mittels welchem eine aus einem vulkanisierten Gummimaterial ausgebildete Kontaktfläche (30) des Aufnahmekörpers an einem aussparungsfreien Fügeabschnitt (16) der innenliegenden Gummischicht (14) des vulkanisierten Reifens (10) positionierbar ist; und
- einer Heizeinrichtung, mittels welcher das Setzwerkzeug (100) zur Erzielung eines Wärmeintrags in ein Vulkanisationsmittel (32) vor und/oder während des Fügens des Aufnahmekörpers mit dem Fügeabschnitt (16) der innenliegenden Gummischicht (14) des vulkanisierten Reifens (10) beheizbar ist;
wobei das Setzwerkzeug einen beheizbaren Stempel oder einen Heizbalg umfasst, die dazu eingerichtet sind, in einer Aufnahmekammer des Aufnahmekörpers angeordnet zu werden.

16. Fügeanlage nach Anspruch 15,
**dadurch gekennzeichnet, dass** die Fügeanlage zum Ausführen des Verfahrens nach einem der Ansprüche 1 bis 14 ausgebildet ist.

## Claims

1. Method for fastening a receiving body (20) for an electronic device to an inner rubber layer (14) of a vulcanized tyre (10), having the following steps:
- positioning a contact surface (30), made of a vulcanized rubber material, of the receiving body (20) on a cutout-free joining portion (16) of the inner rubber layer (14) of the vulcanized tyre (10) by means of a setting tool (100);
- joining the contact surface (30) of the receiving body (20) to the joining portion (16) of the inner rubber layer (14) of the vulcanized tyre (10) by vulcanization of a vulcanization agent (32) which is situated between the contact surface (30) of the receiving body (20) and the joining portion (16) of the inner rubber layer (14) of the vulcanized tyre (10);
wherein the setting tool (100) is heated before and/or during the joining of the receiving body (20) to the joining portion (16) of the inner rubber layer (14) of the vulcanized tyre (10) in order to realize an introduction of heat into the vulcanization agent (32).

2. Method according to Claim 1,
**characterized in that**, before the positioning of the contact surface (30) of the receiving body (20) on the joining portion (16) of the inner rubber layer (14) of the tyre (10), at least one of the following steps is carried out:
- subjecting the contact surface (30) of the receiving body (20) to pre-treatment, in particular thermal, mechanical and/or chemical pre-treatment;
- subjecting the joining portion (16) of the inner rubber layer (14) of the tyre (10) to pre-treatment, in particular thermal, mechanical and/or chemical pre-treatment.

3. Method according to Claim 2,
**characterized in that** the pre-treatment of the contact surface (30) of the receiving body (20) and/or of the joining portion (16) of the inner rubber layer (14) of the tyre (10) comprises the following step:
- cleaning the contact surface (30) of the receiving body (20) and/or the joining portion (16) of the inner rubber layer (14) of the tyre (10).

4. Method according to Claim 2 or 3,
**characterized in that** the pre-treatment of the contact surface (30) of the receiving body (20) and/or of the joining portion (16) of the inner rubber layer (14) of the tyre (10) comprises the following step:
- modifying the surface structure of the contact surface (30) of the receiving body (20) and/or of the joining portion (16) of the inner rubber layer (14) of the tyre (10) to increase the surface area.

5. Method according to Claim 4,
**characterized in that** the surface structure of the contact surface (30) of the receiving body (20) and/or of the joining portion (16) of the inner rubber layer (14) of the tyre (10) are/is modified by an abrasive blasting process, in particular by abrasively blasting the contact surface (30) of the receiving body (20) and/or of the joining portion (16) of the inner rubber layer (14) of the tyre (10) with dry ice.

6. Method according to one of Claims 2 to 5,
**characterized in that** the pre-treatment of the contact surface (30) of the receiving body (20) and/or of the joining portion (16) of the inner rubber layer (14) of the tyre (10) comprises the following step:
- activating the contact surface (30) of the receiving body (20) and/or of the joining portion (16) of the inner rubber layer (14) of the tyre (10) by breaking up molecules on the contact surface (30) of the receiving body (20) and/or on the joining portion (16) of the inner rubber layer (14) of the vulcanized tyre (10).

7. Method according to one of the preceding claims,
**characterized in that**, before the positioning of the contact surface (30) of the receiving body (20) on the joining portion (16) of the inner rubber layer (14) of the tyre (10), at least one of the following steps is carried out:
- depositing the vulcanization agent (32) on the contact surface (30) of the receiving body (20);
- depositing the vulcanization agent (32) on the joining portion (16) of the inner rubber layer (14) of the tyre (10).

8. Method according to one of the preceding claims,
**characterized in that**, before the positioning of the contact surface (30) of the receiving body (20) on the joining portion (16) of the inner rubber layer (14) of the tyre (10), at least one of the following steps is carried out:
- positioning a carrier element (34) comprising the vulcanization agent (32) on the contact surface (30) of the receiving body (20);
- positioning a carrier element (34) comprising the vulcanization agent (32) on the joining portion (16) of the inner rubber layer (14) of the tyre (10).

9. Method according to one of the preceding claims,
**characterized in that** the vulcanization agent (32) comprises an oil-based, solvent-based or water-based rubber solution.

10. Method according to one of the preceding claims,
**characterized in that**, before the positioning of the contact surface (30) of the receiving body (20) on the joining portion (16) of the inner rubber layer (14) of the tyre (10), at least one of the following steps is carried out:
- removing a patch that was applied beforehand from the contact surface (30) of the receiving body (20);
- removing a patch that was applied beforehand from the joining portion (16) of the inner rubber layer (14) of the tyre (10).

11. Method according to one of the preceding claims,
**characterized in that** the outer side of the tyre (10) in the region of the joining portion (16) is supported during the vulcanization of the vulcanization agent (32) which is situated between the contact surface (30) of the receiving body (20) and the joining portion (16) of the inner rubber layer (14) of the tyre (10).

12. Method according to one of the preceding claims,
**characterized in that**, after the joining of the contact surface (30) of the receiving body (20) to the joining portion (16) of the inner rubber layer (14) of the tyre (10), the following step is carried out:
- checking the properties of the connection between the contact surface (30) of the receiving body (20) and the joining portion (16) of the inner rubber layer (14) of the tyre (10).

13. Method according to one of the preceding claims,
**characterized by** at least one of the following steps:
- inserting an electronic device into a receiving chamber (22) of the receiving body (20);
- fixing the electronic device in the receiving chamber (22) of the receiving body (20).

14. Method according to one of the preceding claims,
**characterized in that** the contact surface (30) of the receiving body is joined to the joining portion (16) of the inner rubber layer (14) of the tyre (10) in a technical joining machine and the method comprises at least one of the following steps:
- conveying the vulcanized tyre (10) to an identification station of the joining machine by means of a technical conveyor;
- recording an identifying feature of the tyre (10) in the identification station of the joining machine;
- conveying the vulcanized tyre (10) to a joining station of the joining machine by means of a technical conveyor;
- inserting a tyre spreader into the tyre (10) in the joining station of the joining machine;
- aligning and/or fixing the tyre (10) in the joining station;
- receiving the receiving body by way of the setting tool (100) of the joining machine.

15. Joining machine for fastening a receiving body for an electronic device to an inner rubber layer (14) of a vulcanized tyre (10), comprising:
- a setting tool (100), by means of which a contact surface (30), made of a vulcanized rubber material, of the receiving body can be positioned on a cutout-free joining portion (16) of the inner rubber layer (14) of the vulcanized tyre (10); and
- a heating tool, by means of which the setting tool (100) can be heated (32) before and/or during the joining of the receiving body to the joining portion (16) of the inner rubber layer (14) of the vulcanized tyre (10) in order to realize an introduction of heat into a vulcanization agent;
wherein the setting tool comprises a heatable punch or a heating bladder, which are designed to be arranged in a receiving chamber of the receiving body.

16. Joining machine according to Claim 15,
**characterized in that** the joining machine is designed to carry out the method according to one of Claims 1 to 14.

## Revendications

1. Procédé de fixation d'un corps de réception (20) pour un appareil électronique à une couche de caoutchouc interne (14) d'un pneumatique vulcanisé (10), comprenant les étapes suivantes :
- positionner une surface de contact (30) du corps de réception (20), formée d'un matériau en caoutchouc vulcanisé, sur une partie d'assemblage (16) sans évidement de la couche de caoutchouc interne (14) du pneumatique vulcanisé (10) au moyen d'un outil de pose (100) ;
- assembler la surface de contact (30) du corps de réception (20) avec la partie d'assemblage (16) de la couche de caoutchouc interne (14) du pneumatique vulcanisé (10) par vulcanisation d'un agent de vulcanisation (32) se trouvant entre la surface de contact (30) du corps de réception (20) et la partie d'assemblage (16) de la couche de caoutchouc interne (14) du pneumatique vulcanisé (10) ;
dans lequel l'outil de pose (100) est chauffé avant et/ou pendant l'assemblage du corps de réception (20) avec la partie d'assemblage (16) de la couche de caoutchouc interne (14) du pneumatique vulcanisé (10) de façon à obtenir un apport de chaleur dans l'agent de vulcanisation (32).

2. Procédé selon la revendication 1,
**caractérisé en ce que**, avant de positionner la surface de contact (30) du corps de réception (20) sur la partie d'assemblage (16) de la couche de caoutchouc interne (14) du pneumatique (10), on met en oeuvre au moins l'une des étapes suivantes :
- prétraitement, en particulier prétraitement thermique, mécanique et/ou chimique, de la surface de contact (30) du corps de réception (20) ;
- prétraitement, notamment thermique, mécanique et/ou chimique, de la partie d'assemblage (16) de la couche de caoutchouc interne (14) du pneumatique (10).

3. Procédé selon la revendication 2,
**caractérisé en ce que** le prétraitement de la surface de contact (30) du corps de réception (20) et/ou de la partie d'assemblage (16) de la couche de caoutchouc interne (14) du pneumatique (10) comprend l'étape suivante :
- nettoyage de la surface de contact (30) du corps de réception (20) et/ou de la partie d'assemblage (16) de la couche de caoutchouc interne (14) du pneumatique (10).

4. Procédé selon la revendication 2 ou la revendication 3,
**caractérisé en ce que** le prétraitement de la surface de contact (30) du corps de réception (20) et/ou de la partie d'assemblage (16) de la couche de caoutchouc interne (14) du pneumatique (10) comprend l'étape suivante :
- modification de la structure de surface de la surface de contact (30) du corps de réception (20) et/ou de la partie d'assemblage (16) de la couche de caoutchouc interne (14) du pneumatique (10) pour augmenter la surface.

5. Procédé selon la revendication 4,
**caractérisé en ce que** la modification de la structure de surface de la surface de contact (30) du corps de réception (20) et/ou de la partie d'assemblage (16) de la couche de caoutchouc interne (14) du pneumatique (10) est réalisée par un processus de grenaillage, en particulier par un grenaillage de la surface de contact (30) du corps de réception (20) et/ou de la partie d'assemblage (16) de la couche de caoutchouc interne (14) du pneumatique (10) avec de la neige carbonique.

6. Procédé selon l'une quelconque des revendications 2 à 5,
**caractérisé en ce que** le prétraitement de la surface de contact (30) du corps de réception (20) et/ou de la partie d'assemblage (16) de la couche de caoutchouc interne (14) du pneumatique (10) comprend l'étape suivante :
- activer la surface de contact (30) du corps de réception (20) et/ou la partie d'assemblage (16) de la couche de caoutchouc interne (14) du pneumatique (10) par une rupture de molécules sur la surface de contact (30) du corps de réception (20) et/ou la partie d'assemblage (16) de la couche de caoutchouc interne (14) du pneumatique (10).

7. Procédé selon l'une des revendications précédentes,
**caractérisé en ce que**, avant de positionner la surface de contact (30) du corps de réception (20) sur la partie d'assemblage (16) de la couche de caoutchouc interne (14) du pneumatique (10), au moins une des étapes suivantes est mise en oeuvre :
- application de l'agent de vulcanisation (32) sur la surface de contact (30) du corps de réception (20) ;
- application de l'agent de vulcanisation (32) sur la partie d'assemblage (16) de la couche de caoutchouc interne (14) du pneumatique (10).

8. Procédé selon l'une des revendications précédentes,
**caractérisé en ce que**, avant de positionner la surface de contact (30) du corps de réception (20) sur la partie d'assemblage (16) de la couche de caoutchouc interne (14) du pneumatique (10), au moins une des étapes suivantes est effectuée :
- positionnement d'un élément de support (34) comprenant l'agent de vulcanisation (32) sur la surface de contact (30) du corps de réception (20) ;
- positionnement d'un élément de support (34) comprenant l'agent de vulcanisation (32) sur la partie d'assemblage (16) de la couche de caoutchouc interne (14) du pneumatique (10).

9. Procédé selon l'une des revendications précédentes,
**caractérisé en ce que** l'agent de vulcanisation (32) comprend une solution de caoutchouc à base d'huile, de solvant ou d'eau.

10. Procédé selon l'une des revendications précédentes,
**caractérisé en ce que**, avant de positionner la surface de contact (30) du corps de réception (20) sur la partie d'assemblage (16) de la couche de caoutchouc interne (14) du pneumatique (10), au moins une des étapes suivantes est mise en oeuvre :
- retrait d'un patch préalablement appliqué de la surface de contact (30) du corps de réception (20) ;
- retrait d'un patch préalablement appliqué de la partie d'assemblage (16) de la couche de caoutchouc interne (14) du pneumatique (10).

11. Procédé selon l'une des revendications précédentes,
**caractérisé en ce que** l'extérieur du pneumatique (10) est supporté dans la zone de la partie d'assemblage (16) pendant la vulcanisation de l'agent de vulcanisation (32) situé entre la surface de contact (30) du corps de réception (20) et la partie d'assemblage (16) de la couche de caoutchouc interne (14) du pneumatique (10).

12. Procédé selon l'une des revendications précédentes,
**caractérisé en ce qu'**après l'assemblage de la surface de contact (30) du corps de réception (20) avec la partie d'assemblage (16) de la couche de caoutchouc interne (14) du pneumatique (10), l'étape suivante est mise en oeuvre :
- vérifier les caractéristiques de la liaison entre la surface de contact (30) du corps de réception (20) et la partie d'assemblage (16) de la couche de caoutchouc interne (14) du pneumatique (10).

13. Procédé selon l'une des revendications précédentes,
**caractérisé par** au moins une des étapes suivantes :
- insertion d'un appareil électronique dans une chambre de réception (22) du corps de réception (20) ;
- fixation du dispositif électronique dans la chambre de réception (22) du corps de réception (20).

14. Procédé selon l'une des revendications précédentes,
**caractérisé en ce que** l'assemblage de la surface de contact (30) du corps de réception avec la partie d'assemblage (16) de la couche de caoutchouc interne (14) du pneumatique (10) est réalisé dans une installation d'assemblage technique et le procédé comprend au moins une des étapes suivantes :
- transport du pneumatique vulcanisé (10) vers un poste d'identification de l'installation d'assemblage au moyen d'un dispositif de transport technique ;
- détection d'une caractéristique d'identification du pneumatique (10) dans la station d'identification de l'installation d'assemblage ;
- transport du pneumatique vulcanisé (10) vers un poste d'assemblage de l'installation d'assemblage au moyen d'un dispositif de transport technique ;
- insertion d'une entretoise de pneumatique dans le pneumatique (10) dans la station d'assemblage de l'installation d'assemblage ;
- alignement et/ou fixation du pneumatique (10) dans la station d'assemblage ;
- prise en charge du corps de réception par l'outil de pose (100) de l'installation d'assemblage.

15. Installation d'assemblage pour fixer un corps de réception pour un appareil électronique sur une couche de caoutchouc interne (14) d'un pneumatique vulcanisé (10), comprenant
- un outil de pose (100), au moyen duquel une surface de contact (30) du corps de réception, formée d'un matériau en caoutchouc vulcanisé, est apte à être positionnée sur une partie d'assemblage (16) sans évidement de la couche de caoutchouc interne (14) du pneumatique vulcanisé (10) ; et
- un dispositif de chauffage, au moyen duquel l'outil de pose (100) est apte à être chauffé de façon à obtenir un apport de chaleur dans un agent de vulcanisation (32) avant et/ou pendant l'assemblage du corps de réception à la partie d'assemblage (16) de la couche de caoutchouc interne (14) du pneumatique vulcanisé (10) ;
l'outil de pose comprenant un poinçon ou un soufflet chauffant adapté pour être placé dans une chambre de réception du corps de réception.

16. Installation d'assemblage selon la revendication 15,
**caractérisée en ce que** l'installation d'assemblage est adaptée pour mettre en oeuvre le procédé selon l'une des revendications 1 à 14.
